# EUROPÄISCHE PATENTSCHRIFT

(11) **EP 0 523 453 B1**
(45) Veröffentlichungstag und Bekanntmachung des Hinweises auf die Patenterteilung: **02.02.1994**
(21) Anmeldenummer: 92111165.4
(22) Anmeldetag: 01.07.1992
(51) Int. Cl.: F16L 3/12, H02G 3/26

(54) **Halteelement aus Kunststoff**
Plastic retaining element
Elément de support en plastique

(30) Priorität: 15.07.1991 DE 4123430
(43) Veröffentlichungstag der Anmeldung: 20.01.1993
(73) Patentinhaber: TRW United-Carr GmbH & Co. KG, D-67677 Enkenbach-Alsenborn (DE)
(72) Erfinder: Lewis, Jeffrey Charles, Roseville, MI 48066-4869 (US); O'Sullivan, Daniel Gareth, W-6755 Hochspeyer (DE)
(74) Vertreter: Schieschke, Klaus, Dipl.-Ing.

(56) Entgegenhaltungen:
- DE-A- 3 637 738
- GB-A- 2 185 066

## Beschreibung

Die Erfindung bezieht sich auf ein Halteelement aus Kunststoff zur Halterung mindestens eines Rohres oder Kabels mit einem an einem Träger befestigbaren Lagerbereich und einem Haltebereich mit zwei einander gegenüberliegenden, im unteren Bereich miteinander verbundenen Schalenteilen, welche beidseits des unteren Bereichs mit einem federnden Zwischenstück verbunden sind, das in den Lagerbereich übergeht, wobei die Schalenteile im oberen Bereich über Eingriffselemente miteinander verbindbar sind.

Als Stand der Technik ist bereits ein derartiges Halteelement bekannt (DE-PS 36 37 738), welches so ausgebildet ist, daß die Schalenteile innen mindestens einen federnden Steg aufweisen, der frei in den Innenraum der geöffneten Schalenteile ragt. Die Länge dieser nur einseitig mit dem jeweiligen Schalenteil verbundenen elastischen Stege kann beliebig sein, wobei jedoch sicherzustellen ist, daß auch mehrere Rohre federnd durch diese Stege beaufschlagt und auch bei größeren Beanspruchungen einwandfrei gehaltert werden. Nachteilig bei dieser bekannten Konstruktion ist, daß zwischen dem Durchmesser der zu halternden Rohre und der Länge der elastischen Stege oftmals keine exakte Abstimmung vorliegt, so daß in manchen Anwendungsfällen die zu halternden Rohre bzw. Kabel keine einwandfreie Lagerung erfahren.

Zum Stand der Technik zählt weiterhin ein Rohrhalter (DE-OS 21 62 662), bei welchem innerhalb einer zweiteiligen Rohrschelle eine elastische Einlage angeordnet ist, um lediglich ein einziges Rohr annähernd erschütterungsfrei zu haltern. Diese bekannte Rohrschelle ist nicht zur Halterung mehrere Rohre bzw. Kabel geeignet.

Ein weiteres bekanntes Halteelement weist wiederum zwei Schalenteile auf, welche beidseits des unteren Bereichs mit einem federnden Zwischenstück verbunden sind (US-PS 4 240 604). Hier ist keinerlei Vorkehrung dafür getroffen, wie mehrere Rohre annähernd sicher zwischen den geschlossenen Schalenteilen gehaltert werden können.

Demgegenüber liegt der vorliegenden Erfindung die Aufgabe zugrunde, ein Halteelement der eingangs genannten Art zu schaffen, welches bei einfachem Aufbau in der Lage ist, Rohre unterschiedlichen Durchmessers einwandfrei zu haltern.

Diese Aufgabe wird erfindungsgemäß dadurch gelöst, daß die Schalenteile jeweils einen zwei Schalenteilbereiche miteinander verbindenden und an diesen an einem inneren und einem äußeren Ende befestigten elastischen Steg aufweisen. Durch diesen an beiden Enden befestigten elastischen Steg wird bei einfachem Aufbau des Halteelements gewährleistet, daß sowohl Rohre unterschiedlichen Durchmessers einzeln oder gemeinsam in dem Halteelement erschütterungsfrei und geräuschdämpfend gelagert sind. Damit werden unerwünschte Vibrationen vermieden bzw. gedämpft, wobei außerdem ein minimaler Kontakt zwischen dem zu halternden Rohr und dem an einem Träger befestigten Halteelement vorliegt.

In weiterer Ausgestaltung der Erfindung können die beiden elastischen Stege am inneren Ende im unteren, die beiden Schalenteile miteinander verbindenden Bereich, an diesem befestigt sein. Hierbei können die beiden elastischen Stege ein gemeinsames, inneres Ende aufweisen und über dieses an dem die beiden Schalenteile miteinander verbindenden Bereich befestigt sein. Die beiden Stege können jeweils aus einem elastischen Kunststoff bestehen und im Zweikomponenten-Spritzverfahren durch Kleben oder mechanisch mit dem Halteelement verbunden sein. Damit ergibt sich vorteilhafterweise bei einfachem Aufbau des gesamten Halteelements eine kostensparende Herstellung.

Mindestens einer der Stege kann etwa radial ein Schalenteil durchsetzen, bzw. sehnenartig schneiden. Im geschlossenen Zustand der Schalenteile liegen die an den äußeren Bereichen der Schalenteile befestigten äußeren Enden der elastischen Stege im Abstand voneinander, so daß Rohre unterschiedlichsten Durchmessers einwandfrei in dem erfindungsgemäßen Halteelement gehaltert werden.

In weiterer Ausgestaltung der Erfindung ist das die beiden elastischen Stege miteinander verbindende, gemeinsame innere Ende im Querschnitt dünner ausgebildet als der Querschnitt jeweils einer der elastischen Stege. Hierbei können die beiden elastischen Stege jeweils den gleichen Querschnitt aufweisen.

Um im geschlossenen Zustand die beiden Schalenteile einwandfrei zu führen, kann eine Anschlagschulter an der Innenseite jedes Schalenteils im Bereich des äußeren Endes des Steges vorgesehen sein.

Nach einem weiteren Merkmal der Erfindung kann mindestens eines der Eingriffselemente im Bereich des äußeren Endes eines Steges mindestens eine Führungsschulter auf der Innen- bzw. Außenseite eines Schalenteils aufweisen. Damit werden auch die äußeren Enden der die jeweiligen Schalenteile sehnenartig durchschneidenden elastischen Stege einwandfrei gehaltert.

Die Erfindung wird nachfolgend anhand von in der Zeichnung dargestellten Ausführungsbeispielen näher beschrieben. In der Zeichnung zeigen:
- Fig. 1: das erfindungsgemäße Halteelement in geöffnetem Zustand in Vorderansicht.
- Fig. 2: eine Seitenansicht des Halteelements nach Fig. 1
- Fig. 3: das Halteelement in montiertem Zustand bei Halterung eines Rohres, in Vorderansicht
- Fig. 4: das Halteelement in montiertem Zustand bei Halterung eines Rohres größeren Durchmessers in Vorderansicht.

Das erfindungsgemäße Halteelement 1 besteht aus Kunststoff und dient zur Halterung mindestens eines Rohres bzw. Kabels 2. Hierzu weist das Halteelement einen an einem Träger befestigbaren Lagerbereich 4 auf, oberhalb welchem sich ein federndes Zwischenstück 8 befindet. Ein Haltebereich wird durch zwei einander gegenüberliegende, im unteren Bereich 7 miteinander verbundene Schalenteile 5, 6 gebildet, welche beidseits des unteren Bereichs mit dem federnden Zwischenstück 8 verbunden sind.

Im oberen Bereich weisen die Schalenteile 5, 6 Eingriffselemente 16, 17 auf, wobei die Teile 16 beispielsweise als querverlaufende Rippen ausgebildet sind, wohingegen das Teil 17 als Rasthaken gestaltet sein kann.

Die Schalenteile 5, 6 weisen jeweils einen zwei Schalenteilbereiche miteinander verbindenden und an diesen an einem inneren und einem äußeren Ende 11, 12, 13 befestigten, elastischen Steg 9, 10 auf. Dieser elastische Steg 9, 10 kann etwa radial das jeweilige Schalenteil 5, 6 durchsetzen, wobei jedoch auch die Möglichkeit besteht, daß die Stege 9, 10 das jeweilige Schalenteil 5, 6 sehnenförmig schneiden.

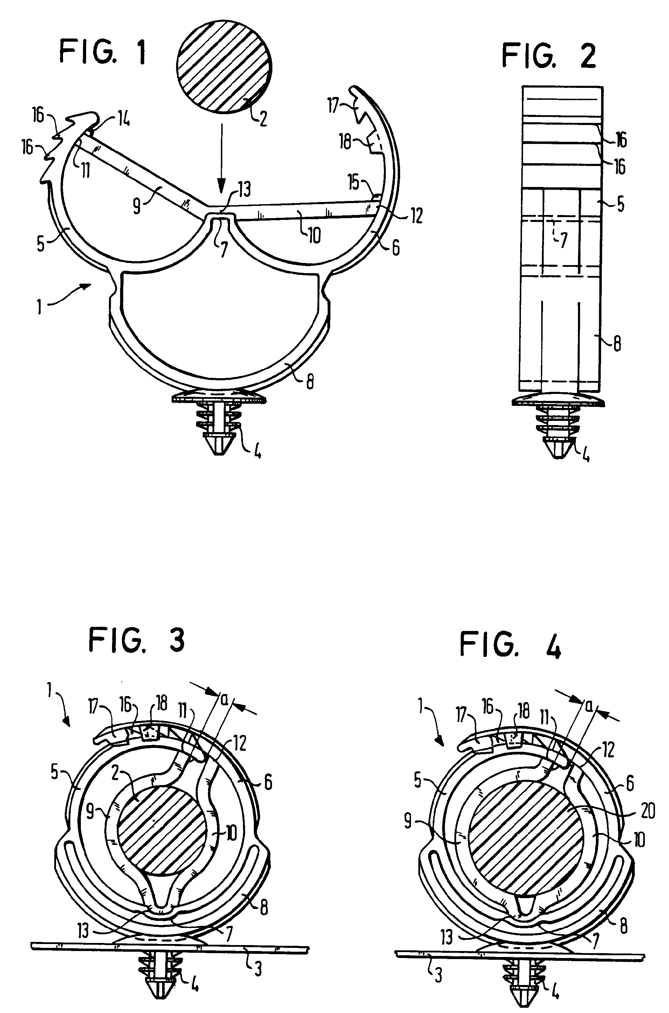

Die beiden elastischen Stege 9, 10 sind am inneren Ende 13 im unteren, die beiden Schalenteile 5, 6 miteinander verbindenden Bereich 7 an diesem befestigt. Wie aus Fig. 1 ersichtlich, haben die beiden elastischen Stege 9, 10 ein gemeinsames, inneres Ende 13 und sind über dieses an dem die beiden Schalenteile 5, 6 miteinander verbindenden Bereich 7 befestigt.

Die beiden Stege 9, 10 bestehen jeweils aus einem elastischen Kunststoff und können beispielsweise im Zweikomponenten-Spritzverfahren an ihren Enden 11, 12, 13 an die Innenseite des jeweiligen Schalenteils 5, 6 befestigt sein. Eine andere Befestigungs-möglichkeit ergibt sich beispielsweise durch Kleben oder auf mechanische Weise.

Wie aus Fig. 1 ersichtlich, kann an der Innenseite jedes Schalenteils 5, 6 jeweils eine Anschlagschulter 14, 15 vorgesehen sein, um die äußeren Enden 11, 12 des jeweiligen elastischen Stegs 9, 10 optimal mit dem Schalenteil 5, 6 zu verbinden.

Weiterhin geht aus Fig. 1 hervor, daß im Bereich des Eingriffselements 17, d.h. der Rastnase, mindestens eine Führungsschulter 18 vorgesehen ist. Zwei Führungsschultern 18 sowie die Innenseite des betreffenden Schalenteils 6 bilden damit eine U-förmige Führung, welche auf die Breite des Schalenteils 5 im montierten Zustand abgestellt ist.

Gemäß Fig. 1 wird ein schematisch dargestelltes Kabel 2 in Pfeilrichtung in das Halteelement 1 eingedrückt. Dadurch gelangt dieses aus der in Fig. 1 dargestellten Offenstellung in die in Fig. 3 dargestellte Schließstellung, wobei hier die Rastnase 17 in die entsprechenden Rippen 16, d.h. die Eingriffselemente, eingreift und damit die Schließung des Halteelements bewirkt. Wie ersichtlich, umschließen die beiden elastischen Stege 9, 10 das betreffende Kabel 2 in einer Weise, das kein unerwünschter Körperschall zwischen den einzelnen Elementen übertragen wird und das außerdem eine erhebliche Reduzierung der Vibration vorliegt. Hierbei ist die Gestaltung so getroffen, daß im geschlossenen Zustand der Schalenteile 5, 6 die an den äußeren Bereichen der Schalenteile befestigten äußeren Enden 11, 12 der elastischen Stege 9, 10 im Abstand a voneinander liegen. Auch hierdurch ergibt sich vorteilhafterweise eine Reduzierung des Körperschalls und der Vibration sowie eine Dämpfung unerwünschter Schwingungen, da die beiden äußeren Enden 11, 12 der elastischen Stege einander nicht berühren. Im geschlossenen Zustand der beiden Schalenteile 5, 6 bewirkt darüber hinaus die Führungsschulter 18 eine einwandfreie Fixierung der beiden Schalenteile gegeneinander, so daß keine unerwünschte Verschiebung stattfinden kann.

Das Halteelement 1 wird über den Lagerbereich 4 in einer Öffnung eines Trägers befestigt, wobei die Gestaltung des Lagerbereichs 4 beliebig, beispielsweise als Profilbolzen gestaltet sein kann.

Soll gemäß Fig. 4 ein Kabel 20 größeren Durchmessers gehaltert werden, so ist erkennbar, daß auch hier die beiden elastischen Stege 9, 10 das Kabel 20 umschließen und lediglich im Bereich des inneren Endes 17 sowie der äußeren im Abstand a voneinander liegenden Enden 11, 12 eine Verbindung zu den Schalenteilen 6, 7 und dem filternden Zwischenstück 8 besteht. Wiederum sind die beiden Schalenteile 5, 6 über die Führungsschultern 18 gegeneinander einwandfrei fixiert.

Statt der Halterung zweier Kabel 2 bzw. 20 unterschiedlichen Durchmessers gemäß Fig. 3 und 4 besteht auch die nicht näher dargestellte Möglichkeit, mehrere Rohre oder Kabel einwandfrei zwischen den elastischen Stegen 9, 10 zu haltern, welche ihrerseits über das innere Ende 13 sowie über die äußeren Enden 11, 12 an den Schalenteilen 5, 6 befestigt sind.

Durch die besondere Gestaltung des Halteelements, welches aus Kunststoff besteht, in Kombination mit den elastischen, an beiden Enden 11, 12, 13 mit der Innenseite des jeweiligen Schalenteils 5, 6 verbundenen Stege 9, 10, ergibt sich bei einfachem Aufbau der gesamten Einheit eine sehr gute Dämpfung der Vibrationen trotz Halterung von Rohren oder Kabeln unterschiedlichen Durchmessers, wobei der Montage- bzw. Demontagevorgang schnell durchführbar ist.

## Patentansprüche

1. Halteelement aus Kunststoff, zur Halterung mindestens eines Rohres oder Kabels mit einem an einem Träger befestigbaren Lagerbereich und einem Haltebereich mit zwei einander gegenüberliegenden, im unteren Bereich miteinander verbundenen Schalenteilen, welche beidseits des unteren Bereichs mit einem federnden Zwischenstück verbunden sind, das in den Lagerbereich übergeht, wobei die Schalenteile im oberen Bereich über Eingriffselemente miteinander verbindbar sind, dadurch gekennzeichnet,
daß die Schalenteile (5, 6) jeweils einen zwei Schalenteilbereiche miteinander verbindenden und an diesen an einem inneren und einem äußeren Ende (11, 12, 13) befestigten elastischen Steg (9, 10) zur Halterung von Rohren unterschiedlichen Durchmessers aufweisen.

2. Halteelement nach Anspruch 1,
dadurch gekennzeichnet,
daß die beiden elastischen Stege (9, 10) am inneren Ende (13) im unteren, die beiden Schalenteile (5, 6) miteinander verbindenden Bereichen (7) an diesem befestigt sind.

3. Halteelement nach Anspruch 1 und 2,
dadurch gekennzeichnet,
daß die beiden elastischen Stege (9, 10) ein gemeinsames inneres Ende (13) aufweisen und über dieses an dem die beiden Schalenteile (5, 6) miteinander verbindenden Bereichen (7) befestigt sind.

4. Halteelement nach Anspruch 1 bis 3,
dadurch gekennzeichnet,
daß die beiden Stege (9, 10) jeweils aus einem elastischen Kunststoff bestehen und im Zweikomponenten-Spritzverfahren, durch Kleben oder mechanisch mit dem Halteelement (1) verbunden sind.

5. Halteelement nach einem der vorhergehenden Ansprüche,
dadurch gekennzeichnet,
daß mindestens einer der Stege (9, 10) etwa radial ein Schalenteil (5, 6) durchsetzt.

6. Halteelement nach einem der Ansprüche 1 bis 4,
dadurch gekennzeichnet,
daß mindestens einer der Stege (9, 10) ein Schalenteil (5, 6) sehnenförmig schneidet.

7. Halteelement nach einem oder mehreren der vorhergehenden Ansprüche,
dadurch gekennzeichnet,
daß im geschlossenen Zustand der Schalenteile (5, 6) die an den äußeren Bereichen der Schalenteile befestigten äußeren Enden (11, 12) der elastischen Stege (9, 10) im Abstand (a) voneinander liegen.

8. Halteelement nach Anspruch 3,
dadurch gekennzeichnet,
daß das die beiden elastischen Stege (9, 10) miteinander verbindende, gemeinsame innere Ende (13) im Querschnitt dünner ausgebildet ist als der Querschnitt jeweils einer der elastischen Stege (9, 10).

9. Halteelement nach einem der vorhergehenden Ansprüche,
dadurch gekennzeichnet,
daß die beiden elastischen Stege (9, 10) jeweils den gleichen Querschnitt aufweisen.

10. Halteelement nach einem der vorhergehenden Ansprüche,
gekennzeichnet durch
jeweils eine Anschlagschulter (14, 15) an der Innenseite dieses Schalenteils (5, 6) im Bereich des äußeren Endes (11, 12) des Steges (9, 10).

11. Halteelement nach einem der vorhergehenden Ansprüche,
dadurch gekennzeichnet, daß mindestens eines der Eingriffselemente (16, 17) im Bereich des äußeren Endes (11, 12) eines Steges (9, 10) mindestens eine Führungsschulter (18) auf der Innen- bzw. Außenseite eines Schalenteils (5, 6) aufweist.

## Claims

1. Holding element made of plastic, for mounting at least one pipe or cable with a bearing region, which can be fixed to a support, and a holding region with two shell parts which are opposite one another, are connected to one another in the lower region and are connected on both sides of the lower region to a resilient intermediate piece which merges into the bearing region, it being possible to connect the shell parts to one another in the upper region via engaging elements, characterized in that the shell parts (5, 6) have in each case a flexible web (9, 10) which connects two shell-part regions to one another, is fastened to said shell-part regions at an inner and an outer end (11, 12, 13) and is intended for mounting pipes of varying diameter.

2. Holding element according to Claim 1, characterized in that the two flexible webs (9, 10) are fastened, at the inner end (13), in the lower region (7) which connects the two shell parts (5, 6) to one another, to said lower region.

3. Holding element according to Claims 1 and 2, characterized in that the two flexible webs (9, 10) have a common inner end (13) and are fastened via the latter to the region (7) which connects the two shell parts (5, 6) to one another.

4. Holding element according to Claims 1 to 3, characterized in that the two webs (9, 10) consist in each case of a flexible plastic and are connected to the holding element (1) by two-component injection moulding, by adhesion or mechanically.

5. Holding element according to one of the preceding claims, characterized in that at least one of the webs (9, 10) penetrates a shell part (5, 6) approximately radially.

6. Holding element according to one of Claims 1 to 4, characterized in that at least one of the webs (9, 10) intersects a shell part (5, 6) in the manner of a chord.

7. Holding element according to one or more of the preceding claims, characterized in that, in the closed state of the shell parts (5, 6), the outer ends (11, 12), fastened to the outer regions of the shell parts, of the flexible webs (9, 10) are at a distance (a) from one another.

8. Holding element according to Claim 3, characterized in that the common inner end (13) connecting the two flexible webs (9, 10) to one another is designed thinner in cross-section than the cross-section of in each case one of the flexible webs (9, 10).

9. Holding element according to one of the preceding claims, characterized in that the two flexible webs (9, 10) have in each case the same cross-section.

10. Holding element according to one of the preceding claims, characterized by in each case a stop shoulder (14, 15) on the inner side of this shell part (5, 6) in the region of the outer end (11, 12) of the web (9, 10).

11. Holding element according to one of the preceding claims, characterized in that at least one of the engagement elements (16, 17) in the region of the outer end (11, 12) of the web (9, 10) has at least one guide shoulder (18) on the inner or outer side of a shell part (5, 6).

## Revendications

1. Elément de support en plastique destiné à la fixation d'au moins un tube ou câble avec une zone d'appui pouvant être fixée sur un élément porteur, et une zone de support comportant deux éléments en coquille en regard l'un de l'autre et raccordés entre eux dans la zone inférieure, éléments en coquille qui sont reliés des deux côtés de la zone inférieure par un élément intermédiaire élastique qui communique avec la zone d'appui, les éléments en coquille dans la zone supérieure pouvant être raccordés entre eux par des éléments d'engagement, caractérisé en ce que
les éléments de coquille (5, 6) présentent respectivement une entretoise élastique (9, 10) reliant entre eux deux zones d'éléments en coquille et fixés sur ceux-ci à une extrémité intérieure et à une extrémité extérieure (11, 12, 13) pour la fixation de tubes de différents diamètres.

2. Elément de support selon la revendication 1, caractérisé en ce que les deux entretoises élastiques (9, 10) sont fixées par l'extrémité intérieure (13) dans les zones inférieures (7) qui relient entre elles les deux parties de coquille (5, 6).

3. Elément de support selon les revendications 1 et 2, caractérisé en ce que les deux entretoises élastiques (9, 10) présentent une extrémité commune intérieure (13) et sont fixées par celle-ci sur les zones (7) reliant les deux éléments de coquille (5, 6) entre elles.

4. Elément de support selon les revendications 1 à 3, caractérisé en ce que les deux entretoises (9, 10) consistent respectivement en une matière plastique élastique et sont reliées entre elles par un procédé de pulvérisation à deux composants, par collage, ou mécaniquement avec l'élément de support (1).

5. Elément de support selon l'une des revendications précédentes, caractérisé en ce qu'au moins l'une des entretoises (9, 10) traverse sensiblement radialement un élément de coquille (5, 6).

6. Elément de support selon l'une des revendications 1 à 4, caractérisé en ce qu'au moins l'une des entretoises coupe à la corde une partie de coquille (5, 6).

7. Elément de support selon l'une ou plusieurs des revendications précédentes, caractérisé en ce qu'à l'état fermé les parties de coquille (5, 6), les extrémités extérieures (11, 12) des parties de coquille fixées sur les zones extérieures des entretoises élastiques (9, 10) se situent à un certain espacement (a) entre elles.

8. Elément de support selon la revendication 3, caractérisé en ce que l'extrémité intérieure commune (13) reliant les deux entretoises élastiques (9, 10) entre elles est de conception moins épaisse en section transversale que la section transversale de chacune des entretoises élastiques (9, 10).

9. Elément de support selon l'une des revendications précédentes, caractérisé en ce que les deux entretoises élastiques (9, 10) présentent respectivement la même section transversale.

10. Elément de support selon l'une des revendications précédentes caractérisé par, respectivement, un épaulement de butée (14, 15) sur le côté intérieur de cette partie de coquille (5, 6) dans la zone de l'extrémité extérieure (11, 12) de l'entretoise (9, 10).

11. Elément de support selon l'une des revendications précédentes, caractérisé en ce qu'au moins l'un des éléments d'engagement (16, 17) présente dans la zone de l'extrémité extérieure (11, 12) d'une entretoise (9, 10) au moins un épaulement de guidage 18 sur le côté intérieur ou sur le côté extérieur d'une partie de coquille (5, 6).
